# EUROPÄISCHE PATENTANMELDUNG

(11) **EP 0 847 684 A1**
(43) Veröffentlichungstag der Anmeldung: **17.06.1998**
(21) Anmeldenummer: 97118105.2
(22) Anmeldetag: 18.10.1997
(51) Int. Cl.: A01D 61/00

(54) **Landwirtschaftliche Maschine**

(30) Priorität: 10.12.1996 DE 19651224
(71) Anmelder: SAME DEUTZ-FAHR S.P.A., 24047 Treviglio (Bergamo) (IT)
(72) Erfinder: von Allwörden, Wilhelm, 73460 Hüttlingen (DE); Köster, Hans-Jürgen, 89415 Lauingen (DE)
(74) Vertreter: Dreiss, Fuhlendorf, Steimle & Becker

(57) **Zusammenfassung**

Die Erfindung betrifft eine landwirtschaftliche Erntemaschine, insbesondere eine selbstfahrende landwirtschaftliche Erntemaschine, mit einem Aufnahmetisch, der eine Aufnahmeeinrichtung oder ein Mähwerk, vorzugsweise ein Kreiselmähwerk und eine Förderschnecke aufweist, die das aufgenommene Erntegut erfaßt und einem Förderkanal zuführt, wobei die Förderschnecke im Bereich des Förderkanals Fördermittel aufweist. Bei derartigen landwirtschaftlichen Erntemaschinen können Störungen des Erntegutstroms auftreten.

Dieser Nachteil wird erfindungsgemäß dadurch beseitigt, daß die Förderschnecke 3 in dem neben dem Förderkanal 4 befindlichen Bereichen weitere Fördermittel zwischen den Schneckenwendeln 6 aufweist.

## Beschreibung

Die Erfindung betrifft eine landwirtschaftliche Erntemaschine, insbesondere eine selbstfahrende landwirtschaftliche Erntemaschine, mit einem Aufnahmetisch, der eine Aufnahmeeinrichtung oder ein Mähwerk, vorzugsweise ein Kreiselmähwerk und eine Förderschnecke aufweist, die das aufgenommene Erntegut erfaßt und einem Förderkanal zuführt, wobei die Förderschnecke im Bereich des Förderkanals Fördermittel aufweist.

Die DD-155 230 beschreibt eine selbstfahrende Mähmaschine mit einem Fingerschneidwerk und einer in Fahrtrichtung hinter diesem angeordneten Querförderschnecke, die das Erntegut zu teilweise verschließbaren Übergabeöffnungen fördert. Im Bereich dieser Übergabeöffnungen sind zusätzliche Fördermittel vorgesehen, die Verstopfungen bei der Förderung des Ernteguts verhindern sollen. Trotz dieser Maßnahmen kommt es bei derartigen Mähmaschinen immer wieder zu Störungen bei der Förderung des Ernteguts.

Wenn dieser Effekt schon bei obiger Mähmaschine mit ihrer relativ geringen Mähleistung auftritt, um so größer ist diese Gefahr bei modernen Hochleistungserntemaschinen mit Kreiselmähwerk.

Es ist deshalb Aufgabe der Erfindung, eine leistungsfähige landwirtschaftliche Erntemaschine zu schaffen, bei der keine Störungen des Erntegutstroms auftreten.

Die Aufgabe wird dadurch gelöst, daß die Förderschnecke in den neben dem Förderkanal befindlichen Bereichen weitere Fördermittel zwischen den Schneckenwendeln aufweist. Auf diese Weise wird ein Stau des Ernteguts zwischen Aufnahmeeinrichtung oder Mähwerk und der Förderschnecke vermieden, da die weiteren Fördermittel das Erntegut sofort erfassen und der Förderschnecke zufuhren. Durch diese gelangt es dann störungsfrei zum Förderkanal, in dessen Bereich bekannte Fördermittel einen ebenfalls störungsfreien Erntegutstrom in den Förderkanal sicherstellen.

Von Vorteil ist, daß erfindungsgemäß die weiteren Fördermittel der Förderschnecke als elastische Elemente ausgebildet sind. Hierbei kann es sich um Lappen oder um elastisch angelenkte Stäbe handeln, die den gewünschten Fördereffekt bewirken.

Es hat sich weiterhin als vorteilhaft gezeigt, daß die weiteren Fördermittel der Förderschnecke als starre Finger ausgebildet sind. Die erfindungsgemäße Anwendung dieses an sich bekannten und bewährten Bauelements führt ebenfalls zu der gewünschten störungsfreien Förderung des aufgenommenen Ernteguts.

Dadurch, daß die Finger an einer Schneckentrommel starr befestigt sind und maximal bis zum Außendurchmesser der Förderwandel reichen, ergibt sich eine besonders einfache und kostengünstige sowie verschleißarme Lösung.

Wenn die Finger beweglich ausgebildet sind, und in Fahrtrichtung gesehen in der vorderen Hälfte der Schneckentrommel in an sich bekannter Weise exzentergesteuert aus dieser hervortreten und in der hinteren Hälfte derselben wieder in dieser verschwinden, wird das Erntegut besonders wirkungsvoll erfaßt und störungsfrei durch die Förderschnecke hindurch zum Förderkanal geführt. Die dazu erforderlichen technischen Maßnahmen sind an sich bekannt und bewährt.

Von Vorteil ist, wenn das Kreiselmähwerk als Scheibenmähwerk oder als Trommelmähwerk ausgebildet ist. Hierbei handelt es sich um ein besonders effektives und schwingungsarmes Mähwerk mit sauberer Erntegutführung.

Dadurch, daß die Finger der Förderschnecke im Austragebereich der gegenläufig angeriebenen Mähscheiben oder Mähdtrommeln angeordnet sind, wird erreicht, daß exakt an den Stellen, an denen der konzentrierte Erntegutstrom auf die Förderschnecke trifft, diese die erforderlichen Mittel aufweist, um den Erntegutstrom störungsfrei in dieselbe aufzunehmen und weiterzuleiten.

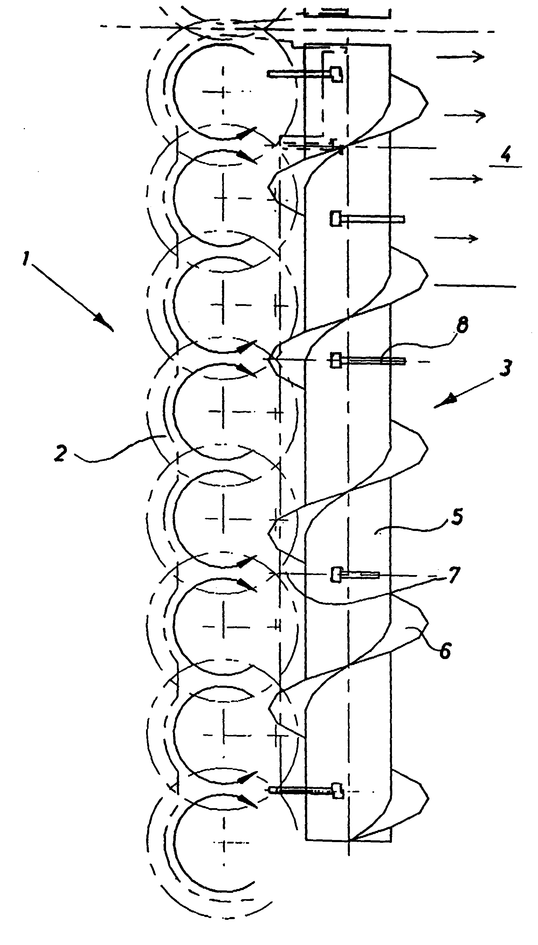

Weitere Merkmale der Erfindung ergeben sich aus der folgenden Beschreibung und der Zeichnung, in der ein Ausführungsbeispiel der Erfindung schematisch dargestellt ist.

Die einzige Figur zeigt ein Kreiselmähwerk 1 mit acht Mähscheiben 2 oder Trommelscheiben 2a, die paarweise gegenläufig angetrieben sind. Direkt hinter dem Kreiselmähwerk 1 ist eine Förderschnecke vorgesehen, die das Erntegut zu einem Förderkanal 4 fördert. Die Förderschnecke 3 weist eine Schneckentrommel 5 mit darauf befestigter Schneckenwandel 6 auf.

Im Austragebereich 7 der gegenläufigen Mähscheiben 2 oder Trommelscheiben 2a sind an der Schneckentrommel 5 Finger 8 winkelversetzt angeordnet. Diese können starr oder exzentergesteuert ausgebildet sein. Sie ergreifen den im Austragebereich 7 ankommenden Erntegutstrom und führen ihn in die Förderschnecke 3. Diese transportiert das Erntegut zu dem Förderkanal 4, wo es mit Hilfe von Fingern 8 störungsfrei abgegeben wird.

Die exzentergesteuerten Finger 8 bieten den Vorteil, daß sie den Erntegutstrom optimal erfassen und wieder abgeben und zugleich dessen axialen Transport in der Schneckenwandel 6 nicht behindern.

## Patentansprüche

1. Landwirtschaftliche Erntemaschine, insbesondere eine selbstfahrende landwirtschaftliche Erntemaschine, mit einem Aufnahmetisch, der eine Aufnahmeeinrichtung oder ein Mähwerk, vorzugsweise ein Kreiselmähwerk und eine Förderschnecke aufweist, die das aufgenommene Erntegut erfaßt und einem Förderkanal zuführt, wobei die Förderschnecke im Bereich des Förderkanals Fördermittel aufweist, dadurch gekennzeichnet, daß die Förderschnecke (3) in dem neben dem Förderkanal (4) befindlichen Bereichen weitere Fördermittel zwischen den Schneckenwendeln (6) aufweist.

2. Landwirtschaftliche Erntemaschine nach Anspruch 1, dadurch gekennzeichnet, daß die weiteren Fördermittel der Förderschnecke (3) als elastische Elemente ausgebildet sind.

3. Landwirtschaftiche Erntemaschine nach einem der vorangegangenen Ansprüche, dadurch gekennzeichnet, daß die weiteren Fördermittel der Förderschnecke (3) als starre Finger (8) ausgebildet sind.

4. Landwirtschaftliche Erntemaschine nach einem der vorangegangenen Ansprüche, dadurch gekennzeichnet, daß die Finger (8) an einer Schneckentrommel (5) starr befestigt sind und maximal bis zum Außendurchmesser der Schneckenwandel (6) reichen.

5. Landwirtschaftliche Erntemaschine nach einem der vorangegangenen Ansprüche, dadurch gekennzeichnet, daß die Finger (8) beweglich ausgebildet sind und in Fahrtrichtung gesehen in der vorderen Hälfte der Schneckentrommel (5) in an sich bekannter Weise exzentergesteuert aus dieser hervortreten und in der hinteren Hälfte derselben wieder in dieser verschwinden.

6. Landwirtschaftliche Erntemaschine nach einem der vorangegangenen Ansprüche, dadurch gekennzeichnet, daß das Kreiselmähwerk (1) als Scheibenmähwerk oder als Trommelmähwerk ausgebildet ist.

7. Landwirtschaftliche Erntemaschine nach einem der vorangegangenen Ansprüche, dadurch gekennzeichnet, daß die Finger (8) der Förderschnecke (3) im Austragebereich (7) der gegenläufig angetriebenen Mähscheiben (2) oder Mähtrommeln (2a) angeordnet sind.
